# EUROPEAN PATENT SPECIFICATION

(11) **EP 3 525 266 B1**
(45) Date of publication and mention of the grant of the patent: **10.04.2024**
(21) Application number: 19156316.2
(22) Date of filing: 08.02.2019
(51) Int. Cl.: H01M 4/04, H01M 4/13, H01M 4/139, B29C 48/154, B29C 48/156, B29C 48/16, H01M 4/02, H01M 4/62

(54) **BATTERY ELECTRODE STRUCTURE FOR INTERDIGITATED FINGER CO-EXTRUSION**
BATTERIEELEKTRODENSTRUKTUR FÜR INEINANDERGREIFENDE FINGERKOEXTRUSION
STRUCTURE D'ELECTRODE DE BATTERIE POUR CO-EXTRUSION DE DOIGTS INTERDIGITÉS

(30) Priority: 13.02.2018 US 201815895640
(43) Date of publication of application: 14.08.2019
(73) Proprietor: Palo Alto Research Center Incorporated, Webster, NY 14580 (US)
(72) Inventor: COBB, Corie Lynn, Seattle, WA 98115 (US); RAO, Ranjeet, Redwood City, CA 94061 (US); SOLBERG, Scott E., Los Altos, CA 94023 (US)
(74) Representative: Gill Jennings & Every LLP

(56) References cited:
- EP-A1- 2 749 396
- EP-A1- 2 750 222
- EP-A1- 3 193 393
- EP-A2- 2 249 417
- JP-B2- 3 585 136
- US-A1- 2012 244 444
- US-A1- 2018 013 166

## Description

Numerous applications exist in which batteries, fuel cells, electrical interconnects, ultracapacitors and others benefit from tightly spaced interdigitated stripes of dissimilar materials. These materials can be co-extruded using a co-extrusion print head as disclosed in US Patent Publication 2012/0156364, with a similar but alternative print head being shown in US Patent 7,799,371. Being co-extruded in this context mean that the materials are not mixing as they flow. However, the resulting structures have rectangular geometries in cross sectional form with a straight uniform print in the direction perpendicular to the interdigitated geometries.

However, modeling has shown that non-rectangular cross-section geometries have performance enhancement gains in capacity and energy density. Typically, electrodes result from slot coating processes or thin film and semiconductor fabrication techniques. These methods have not yet reached cost effectiveness for large scale production of structured electrodes.

EP 2 249 417 A2 discloses an electrode for a secondary battery comprising trapezoidal grooves.

EP 3193393 A1 discloses a cathode for lithium ion secondary battery the cathode including collector and active material supported on the current collector the current collector is made of porous metal. The cathode has holes in its surface and active material density is 50 to 80% of true density of the active material. Because the cathode is thick and supported with the active material density and the holes are formed in its surface, transfer of an electron and insertion/release of lithium ion take place in the cathode surface and deep in the cathode in the lithium ion secondary battery. Therefore, the lithium ion released from the active material can migrate in the electrolyte solution in the holes, so that the active material present deep in the cathode is effectively utilised, and thus, the lithium ion secondary battery has high capacity and can promptly charge/discharge.

EP 2750222 A1 relates to a co-extrusion printhead capable of extruding at least two fluids vertically in a single pass having a first inlet port connected to a first manifold, a first series of channels connected to the first inlet port arranged to receive a first fluid from the first inlet port, a second inlet port connected to one of either a second manifold or the first manifold, a second series of channels connected to the second inlet port arranged to receive a second fluid from the second inlet port, a merge portion of the printhead connected to the first and second series of channels, the merge portion arranged to receive the first and second fluids, and an outlet port connected to the merge portion, the outlet Port deposit the first and second fluids from the merge portion as a vertical stack on a substrate.

JP 3585136 B2 relates to a coating device and coating method which applies material of one type on a base material, and form the coating film of a predetermined stripe pattern.

EP 2749396 A1 discloses that a battery has an anode, a separator adjacent to the anode, and a cathode adjacent to the separator opposite the anode, the cathode comprising interdigitated stripes of materials, one of the materials forming a pore channel.

US 2012/0244444 A1 relates to batteries or other electrochemical devices, and systems and materials for use in these, including electrode materials and designs. Embodiments relate to small scale batteries or micro batteries. In some cases the battery may include an electrode comprising a porous electroactive compound. In some embodiments, the pores of the porous electrode may be at least partially filled with a liquid such as a liquid electrolyte. The electrode may be formed from a unitary material.

US 2018/0013166 A1 discusses various methods and apparatus relating to three-dimensional battery structures and methods of manufacturing them. In certain embodiments, a three-dimensional battery comprises a battery enclosure, and a first structural layer within the battery enclosure, where the first structural layer has a first surface and a first plurality of conductive protrusions extend from the first surface. A first plurality of electrodes is located within the battery enclosure, where the first plurality of electrodes includes a plurality of cathodes and a plurality of anodes, and wherein the first plurality of electrodes includes a second plurality of electrodes selected from the first plurality of electrodes, each of the second plurality of electrodes being in contact with the outer surface of one of said first plurality of conductive protrusions. Some embodiments relate to processes of manufacturing energy storage devices with or without the use of a backbone structure or layer.

The invention is defined in the present claims.
Figure 1 shows a prior art interdigitated structure.
Figures 2-3 show embodiments of interdigitated structures not according to the present invention.
Figure 4 shows a prior art embodiment of an interdigitated structure.
Figures 5-6 show embodiments of interdigitated structures not according to the present invention.
Figure 7 shows an embodiment of a battery structure not according to the present invention.
Figures 8 and 9 show plots of material utilization for a prior art and a current embodiment of a lithium structure not according to the present invention.
Figure 10 shows a plot of a discharge performance between prior art and a current embodiment of a lithium structure not according to the present invention.
Figures 11 and 12 show embodiments of a wavy pattern of extruded materials not according to the present invention.
Figure 13 shows an embodiment of an interdigitated structure not according to the present invention having partial, trapezoidal stripes.
Figure 14 shows an embodiment of an interdigitated structure not according to the present invention having partial, trapezoidal voids.
Figure 15 shows an embodiment of an interdigitated structure not according to the present invention having partial, trapezoidal electrolytes.
Figure 16 shows an embodiment of an interdigitated structure having rectangular interdigitated stripes.
Figure 17 shows an embodiment of an interdigitated structure having rectangular interdigitated stripes with trapezoidal voids.
Figure 18 shows an embodiment of an interdigitated structure having rectangular interdigitated stripes with trapezoidal electrolyte regions.
Figure 19 shows an embodiment of structure not according to the present invention having isolated features.
Figure 20 shows a cross sectional view of a structure not according to the present invention having isolated features

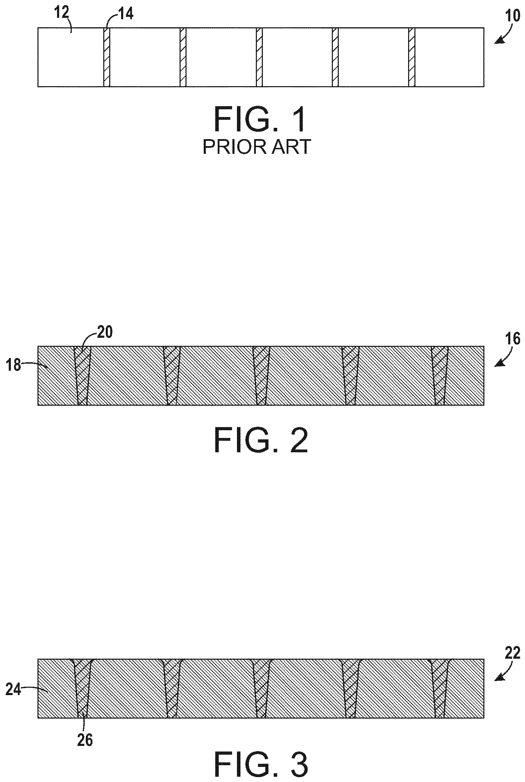

Figures 1-6 show various embodiments of structures not according to the present invention formed using a co-extrusion print head such as that shown in US Patent 7,799,371. Figure 1 shows a prior art embodiment of an electrode structure 10. The structure has a first material 12 in wider portions interdigitated with a second material 14. The material 12 consists of densely packed active electrode material, and the material 14 consists of a highly porous material for enhanced ionic or electrical conductivity. The material 14 may have more or the same electrical conductivity of the first material and will more than likely have higher ionic conductivity.

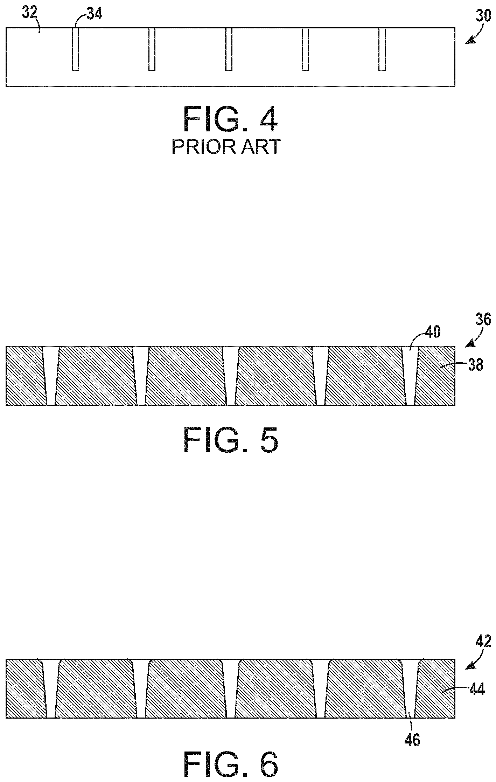

Figure 4 shows a similar prior art scenario, except that the regions 34 result from a sacrificial material having been removed. Only the dense regions such as 32 remain. This would allow an electrolyte to file the regions in the embodiment of a battery electrode.

Figures 2-3 show densely packed regions 18 and 24, and the porous regions 20 and 26 with non-rectangular cross sections. Through control of the process conditions, such as pressure tuning, fluid flow rates and fluid rheology, the structures 16 and 22 may result. Regarding the fluid rheology, viscosity of the two materials should be matched with similar densities. However, the density may vary because of the concentrations of the conductive materials, but the matching of the viscosities remains important.

The non-rectangular cross sections of regions 18 and 24 allow better control of the concentration gradient across the electrode structures 16 and 22. These structures have more surface area of the densely packed regions exposed to the porous region. Larger concentration gradients across a battery electrode cause a larger ohmic drop, which affects the energy density and power density of a battery cell. By controlling the concentration gradient, one can avoid the large gradients and increase the efficiency of the battery cell. The non-rectangular cross-section may have sharp corners or rounded corners.

Figures 5 and 6 shows similar structures 36 and 42 with non-rectangular regions 38 and 44 of the densely packed material, and non-rectangular spaces such as 40 and 46. In these structures, the spaces would be filled with the electrolyte material, exposing more surface area of the densely packed material to the electrolyte.

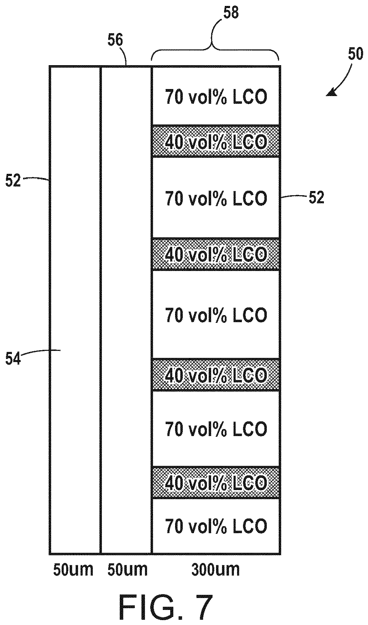

Figure 7 shows a simplified block diagram of a battery model used to determine the performance improvement in the non-rectangular electrode cross sections compared to the rectangular cross section embodiments. The structure 50 has current collector boundaries 52. In this embodiment the anode 54 consists of lithium foil having a thickness in the range of 50 micrometers. A separator 56 separates the anode 52 from the cathode structure 58. The cathode structure 58 in this embodiment consists of alternating regions of densely packed and highly porous materials. While the block diagram of Figure 7 shows these regions as rectangular, they actually have the shape of Figures 2 and 3. In this embodiment, the densely packed region consists of lithium cobalt oxide (LCO) at 70% concentration of active material and the highly porous regions consist of 40% concentrations of LCO.

The material may be any type of battery material with any range of active material concentration, but typically the highly porous regions will have less active material than the dense regions. Further, the materials may be used in other structures than batteries. Examples of materials that may be used include lithium cobalt oxide (LCO), lithium nickel cobalt manganese oxide (NCM), or a mixture of the two. Other materials may include lithium nickel cobalt aluminum oxide (NCA), lithium manganese oxide (LMO), or lithium iron phosphate (LFeP). The anode material may be lithium titanate (LTO).

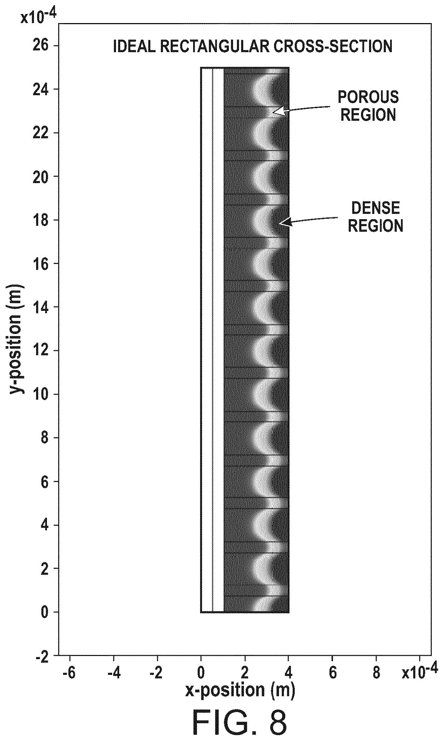

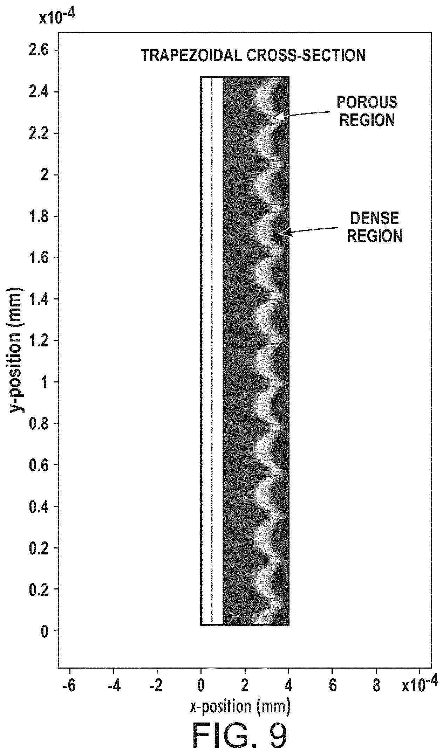

Figures 8 and 9 show material utilization plots for the electrode structures of Figure 1 and Figure 2 respectively after a '1C' discharge, where the applied current density is 12.9 mA/cm². A 'C' rate discharge is a measure of the rate at which a battery discharges relative to its maximum capacity. A `1C' rate is the current at which the battery will discharge its entire capacity in 1 hour. Mass and volume are conserved between the porous and dense regions of the structures with the only difference being the geometry of the cross-section. The structure of Figure 2 has approximately 10% greater active material utilization over the structure of Figure 1 at the 1C rate.

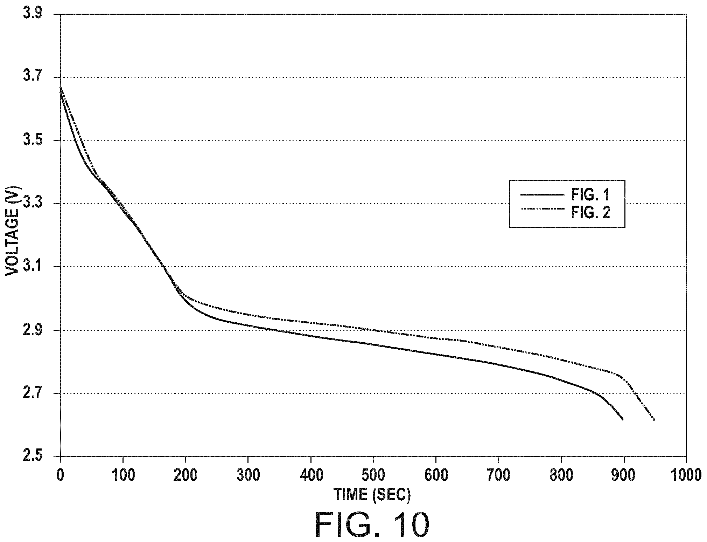

The capacity, energy and power numbers in the table below show the relative performance improvement between the structures but not the absolute performance improvement one can realize for lithium cobalt oxide. Figure 10 in conjunction with the below table shows the energy, power and capacity gains made using the non-rectangular structure. On the graph in Figure 10, the upper line is the structure of Figure 2 and the lower line is the structure of Figure 1. The plots show that the structure of Figure 2 has a longer run time and a lower voltage drop than the structure of Figure 1. This is due to the increase in the active material utilization and the lower concentration gradient in the cathode structure.

| | Specific Capacity (mAh/g) | Energy Density (Wh/kg) | Power Density (W/kg) |
|---|---|---|---|
| Non-rectangular | 36.126 | 106.917 | 405.160 |
| Rectangular | 34.225 | 100.318 | 401.273 |
| % Improvement | 5.6% | 6.6% | 1.0% |

As mentioned previously, these gains do not come from higher volume in the structures or more mass, merely from the change in the geometries.

Up to this point, the discussion has focused on the geometrical change of the cross section relative to battery electrode structures. However, as mentioned previously, control of the process parameters may accomplish non-rectangular structures formed by the print head as etch masks and interconnects. In this environment, the structures shown in Figures 5 and 6 would make up the material left behind once the sacrificial material is removed. The material could be conductive or polymer, depending upon the purpose of the material in the resulting structure. For example, for circuit interconnects, the material would be conductive, either metal or a conductive polymer, used as contacts after removal of the sacrificial material.

The print head discussed in US Patent Publication 2012/0156364 has what are referred to as 'swept' flow paths, where the edges and corners of the flow paths are angled and/or beveled to alleviate dead spots where material can build up. This built up material may reach a critical mass and then burst into the flow path, or it can cause the flow path to become constricted. In either case, by sweeping the flow paths, the uniformity of the resulting material deposit on a surface is preserved in a straight monolithic pattern. However, by using `unswept' flow paths, or by pulsing the material flow into the print head using pressure differentials or mechanical motion, one can form more randomized, undulating or `wavy' flow patterns of the materials onto a surface.

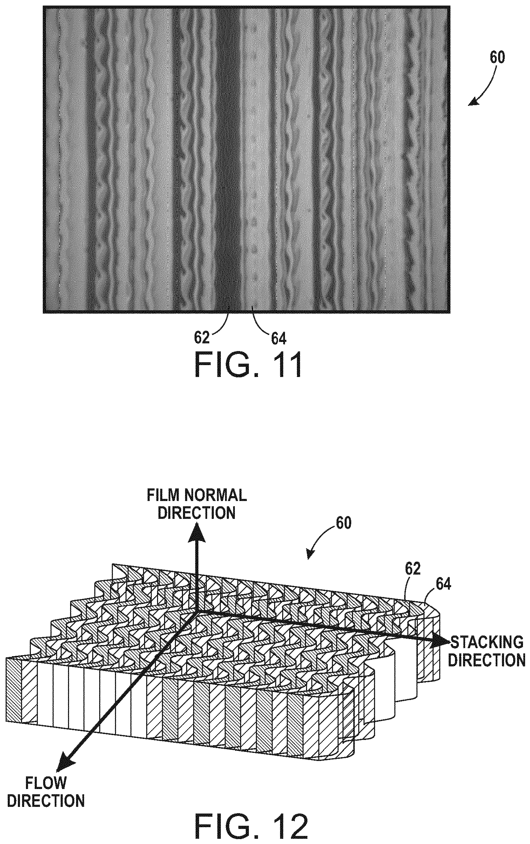

Figure 11 shows an example of such a randomized material pattern. The resulting deposit consists of wavy lines of the two different materials 62 and 64. As mentioned previously, one of the materials may be removed, acting as a sacrificial material. The voids left by the removal may be filled with a different material. Alternatively, the remaining material may form interconnects and contact pads, or may form an etch mask for an underlying material.

Figure 12 shows a simplified version of the material pattern. The flow direction is defined as the direction from which the material flows from the print head. The print head would travel from the edge of the pattern closest to the viewer, pulling back away from the viewer. The direction normal to the film would be the top view of the film. The stacking direction refers to the ability of this pattern to be 'stacked' sideways by running the print head in multiple parallel paths to form a much larger pattern by stacking smaller patterns together sideways in the direction shown.

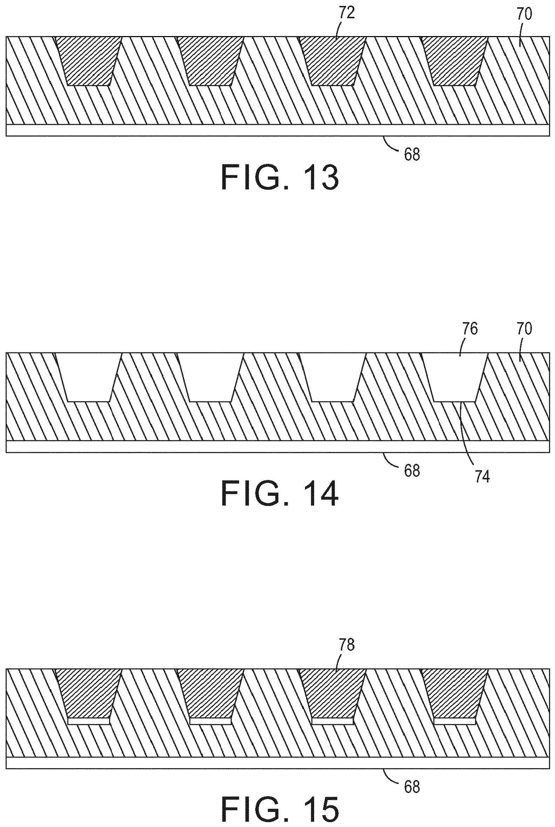

Other variations on these structures are possible. Like the structure of Figure 2, one material may have a trapezoidal profile but not extend all the way through the substrate. Figures 13-15 show one embodiment of a process of manufacturing a structure not according to the present invention. As shown in Figure 13, a first material 70 is deposited onto a substrate 68, with a second material 72 deposited such that it forms partial, trapezoidal structures. The term 'partial' as used here indicates that the structure formed from material 72 does not reach to the substrate. The embodiments here may consist of structures in which the second material is a partial structure, or structures in which both materials form complete structures.

In the embodiments here, the first material will typically consist of a first active material, a solvent, and a binder. The second material consists of a solvent and a second active material. The relationship between the first and second active materials may take many forms. The first active material may have a higher density than the second material. The two materials may have different porosities, with the first active material having a higher porosity than the second. In addition, the second active material may consist of a more dilute version of the first active material. For example, the second active material may be very similar to the first active material, such as being the same material but in a more dilute solution.

Figure 14 shows the next part of this embodiment of the process not according to the present invention. The structure undergoes drying that removes the second material 72. This removal process will more than likely result in a residue forming on at least one surface of the void 76 formed by removal of the second material. This residue shown as 74.

In Figure 15, an electrolyte 78 may fill the voids 76 when the structure of Figure 14 undergoes packaging as a battery. A housing encloses the structure and it fills with electrolyte, including the voids.

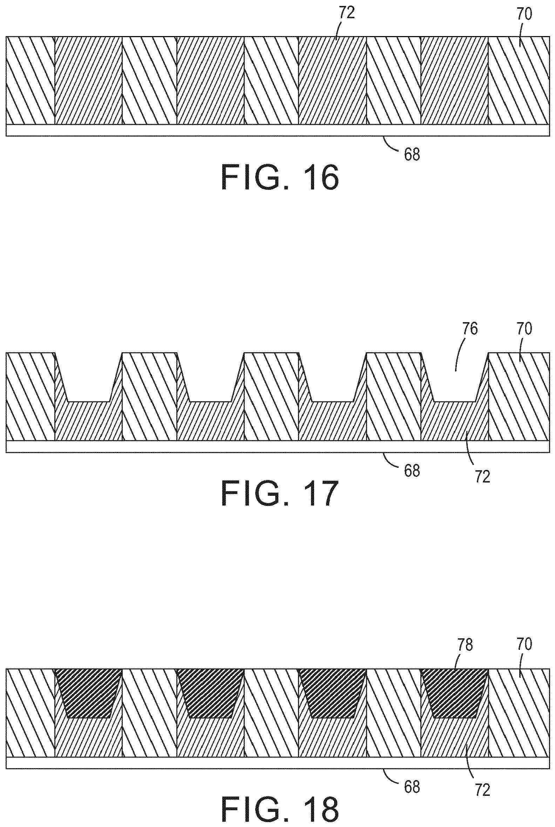

Figures 16-18 show an alternative embodiment, which is according to the present invention. Interdigitated stripes of the first material 70 and the second material 72 are deposited on the substrate 68. These stripes may have square or trapezoidal shapes. The interdigitated structure of Figure 16 then undergoes drying. This results in the structure shown in Figure 17. The voids such as 76, form in the second material, rather than in the first material. In Figure 18, the trapezoidal voids then fill with electrolyte 78.

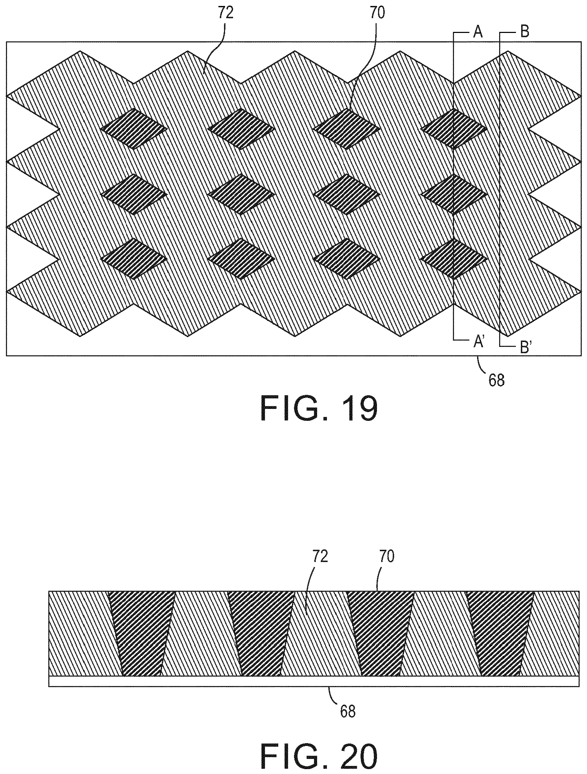

Controlling the pressures used when the materials are being deposited can form the various structures discussed here. Since each material feed is controlled independently, and very often dispensed at different flow rates and pressures, it is possible to manipulate the relative pressures of each material as a print is occurring in order to manipulate the shape and composition of the deposited material. Various control strategies are possible to make a range of structures. This may include turning off the feed of the first material completely to form isolated structures. The second material continues to have the pressure applied that dispenses the second material onto the substrate. This causes the second material to surround the isolated structures during deposition. Figure 19 shows an embodiment of this intermediate structure not according to the present invention in which the isolated structures are formed of the first material 70 surrounded by the sacrificial material 72.

Figure 20 shows a cross-sectional view along line A-A' in Figure 19. The first material 70 has regions of the sacrificial material 72 surrounding them. While this structure looks very similar to the previous structures, one should note that a cross section taken at another point in the structure of Figure 19, such as along line B-B' would only show a solid region of material 72. One should also note that the view of Figure 19 is a top-down view, so the substrate 68 lies underneath the entire structure.

In this manner, one can form more efficient, higher performing electrode structures for batteries by forming the electrode structures with non-rectangular cross sections. The non-rectangular structures may be formed from pre-existing print heads having swept flow paths through control of the process parameters, or from print heads like the pre-existing print heads, but having 'unswept' paths. Similarly, randomized structures usable as interconnects or randomized etch masks may be formed through process controls using pre-existing print heads or using the print heads with unswept flow paths.

## Claims

1. A battery electrode structure, comprising:
a substrate (68);
a first material (70) on the substrate, the first material having a binder and a first active material;
periodically located trapezoidal voids that only partially extend from a top of the first active material towards the substrate;
a second active material (72) interdigitated with the first material, wherein the second active material has a lower density than the first active material and wherein the trapezoidal voids reside in the second active material; and
an electrolyte material (78) filling the trapezoidal voids.

2. A method of manufacturing a battery electrode structure as defined in claim 1, comprising:
depositing a first material on a substrate, the first material comprising a first active material, a solvent, and a binder;
depositing a second material, the second material comprising a second active material and a solvent to form an interdigitated structure with the first material, wherein depositing the second material comprises depositing the second material as interdigitated stripes with the first material, wherein each stripe of the structure reaches the substrate;
drying the interdigitated structure to remove the solvent from the first material and the solvent from the second material and to remove at least some of the second material so that trapezoidal voids form in the second active material, the trapezoidal voids only partially extending from a top of the first active material towards the substrate; and
filling the trapezoidal voids with electrolyte.

## Patentansprüche

1. Batterie-Elektrodenstruktur, die umfasst:
ein Substrat (68);
ein erstes Material (70) auf dem Substrat, wobei das erste Material ein Bindemittel sowie ein erstes aktives Material aufweist;
periodisch angeordnete trapezförmige Hohlräume, die sich nur teilweise von einer Oberseite des ersten aktiven Materials in Richtung des Substrats erstrecken;
ein zweites aktives Material (72), das mit dem ersten Material ineinandergreift, wobei das zweite aktive Material eine niedrigere Dichte hat als das erste aktive Material und sich die trapezförmigen Hohlräume in dem zweiten aktiven Material befinden; sowie
ein Elektrolytmaterial (78), das die trapezförmigen Hohlräume ausfüllt.

2. Verfahren zum Herstellen einer Batterie-Elektrodenstruktur nach Anspruch 1,
das umfasst:
Abscheiden eines ersten Materials auf einem Substrat, wobei das erste Material ein erstes aktives Material, ein Lösungsmittel sowie ein Bindemittel umfasst;
Abscheiden eines zweiten Materials zum Ausbilden einer ineinandergreifenden Struktur mit dem ersten Material, wobei das zweite Material ein zweites aktives Material sowie ein Lösungsmittel umfasst, und Abscheiden des zweiten Materials Abscheiden des zweiten Materials als mit dem ersten Material ineinandergreifende Streifen umfasst, wobei jeder Streifen der Struktur bis zu dem Substrat reicht;
Trocknen der ineinandergreifenden Struktur, um das Lösungsmittel aus dem ersten Material und das Lösungsmittel aus dem zweiten Material zu entfernen und um wenigstens einen Teil des zweiten Materials zu entfernen, so dass sich trapezförmige Hohlräume in dem zweiten aktiven Material bilden, wobei sich die trapezförmigen Hohlräume nur teilweise von einer Oberseite des ersten aktiven Materials in Richtung des Substrats erstrecken; und
Ausfüllen der trapezförmigen Hohlräume mit Elektrolyt.

## Revendications

1. Structure d'électrode de batterie comprenant :
un substrat (68) ;
un premier matériau (70) sur le substrat, le premier matériau ayant un liant et un premier matériau actif ;
des vides trapézoïdaux placés de manière périodique qui ne s'étendent que partiellement depuis le haut du premier matériau actif en direction du substrat ;
un deuxième matériau actif (72) interdigité avec le premier matériau, lequel deuxième matériau actif a une densité inférieure à celle du premier matériau actif, et dans lequel les vides trapézoïdaux résident dans le deuxième matériau actif ; et
un matériau d'électrolyte (78) remplissant les vides trapézoïdaux.

2. Procédé de fabrication d'une structure d'électrode de batterie telle que définie dans la revendication 1, comprenant :
la déposition d'un premier matériau sur un substrat, le premier matériau comprenant un premier matériau actif, un solvant et un liant ;
la déposition d'un deuxième matériau, le deuxième matériau comprenant un deuxième matériau actif et un solvant pour former une structure interdigitée avec le premier matériau, laquelle déposition du deuxième matériau comprend la déposition du deuxième matériau sous la forme de bandes interdigitées avec le premier matériau, chaque bande de la structure atteignant le substrat ;
le séchage de la structure interdigitée pour éliminer le solvant du premier matériau et le solvant du deuxième matériau et pour éliminer au moins une partie du deuxième matériau de façon que des vides trapézoïdaux se forment dans le deuxième matériau actif, les vides trapézoïdaux ne s'étendant que partiellement depuis le haut du premier matériau actif en direction du substrat ; et
le remplissage des vides trapézoïdaux avec un électrolyte.
